Europäisches Patentamt

European Patent Office

Office européen des brevets

(11) Veröffentlichungsnummer: **0 1 1 2 403**
**B1**

(12) **EUROPÄISCHE PATENTSCHRIFT**

(45) Veröffentlichungstag der Patentschrift:
**03.06.87**

(21) Anmeldenummer: **82111984.9**

(22) Anmeldetag: **24.12.82**

(51) Int. Cl.⁴: **H 04 N 1/10, G 06 K 11/00**

(54) Opto-elektronische Abtastvorrichtung.

(43) Veröffentlichungstag der Anmeldung:
**04.07.84 Patentblatt 84/27**

(45) Bekanntmachung des Hinweises auf die Patenterteilung:
**03.06.87 Patentblatt 87/23**

(84) Benannte Vertragsstaaten:
**DE FR GB IT**

(56) Entgegenhaltungen:
**FR - A - 2 071 547**
**FR - A - 2 339 210**
**US - A - 3 886 371**
**US - A - 4 122 352**

(73) Patentinhaber: **IBM DEUTSCHLAND GMBH,**
**Pascalstrasse 100, D-7000 Stuttgart 80 (DE)**

(84) Benannte Vertragsstaaten: **DE**

(73) Patentinhaber: **International Business Machines**
**Corporation, Old Orchard Road, Armonk,**
**N.Y. 10504 (US)**

(84) Benannte Vertragsstaaten: **FR GB IT**

(72) Erfinder: **Lennemann, Eckart, Dr. Dipl.-Ing., Am**
**Joachimsberg 15, D-7033 Herrenberg (DE)**
Erfinder: **Ruppert, Werner, Dipl.-Ing., Gartenstrasse 9,**
**D-7036 Schönaich (DE)**

(74) Vertreter: **Blutke, Klaus, Dipl.-Ing., Schönaicher**
**Strasse 220, D-7030 Böblingen (DE)**

ACTORUM AG

# Beschreibung

Die Erfindung betrifft eine opto-elektronische Abtastvorrichtung der im Oberbegriff des Patentanspruchs bezeichneten Art. Abtastvorrichtungen dieser Art sind bereits seit langem und in grosser Zahl bekannt.

So ist beispielsweise aus der DAS 1 562 173 eine Abtastvorrichtung bekannt, bei der eine Anordnung von in mehreren Reihen angeordneten photoelektrischen Wandlern in einer Ebene parallel zur Vorlagenebene in zwei verschiedenen Richtungen verschiebbar ist, wobei die in mehreren parallen Reihen angeordneten Wandler in Verschieberichtung gegeneinander versetzt sind.

Auch die photoelektronische Abtastung einer auf einer Trommel aufgespannten Vorlage durch einen quer zu der rotierenden Trommel verfahrbaren opto-elektronischen Abtastkopf ist im Prinzip aus der DE-AS 2 701 001 bekannt.

Ein Faksimilie-Abtaster mit zeilenweiser optoelektronischer Abtastung einer Vorlage ist aus DE-OS 2 508 115 bekannt. Das von der Vorlage reflektierte Licht wird durch einen Abtastkopf zeilenweise abgetastet in einem mit ladungsgekoppelten Speicherzellen ausgerüsteten Zeilenspeicher eingegeben.

Abtastvorrichtungen dieser Art haben meist mindestens zwei, manchmal sogar drei voneinander abhängige oder/und miteinander verkoppelte Freiheitsgrade. Eine rotierende Trommel muss z.B. in ihren Achslagern Spiel haben. Ausserdem ist eine Trommel niemals exakt rund, sondern hat immer einen leichten Höhenschlag. Eine längs einer Zeile verfahrbare Abtastanordnung hat ebenfalls Spiel und bringt damit einen weiteren Freiheitsgrad und damit eine gewisse Ungenauigkeit in die Abtastung.

Aus der US-A 3 886 371 ist eine opto-elektrische Abtastvorrichtung mit auf einem gemeinsamen Gestell angebrachter Vorlagenplatte und einem eine Vorlage in zwei verschiedenen Richtungen abtastenden Abtastknopf bekannt.

Diese Vorrichtung weist einen auf einem Gestell angeordneten ersten Träger auf, der durch ein erstes Antriebsystem in einer ersten Richtung antreibbar ist, wobei auf dem ersten Träger ein zweiter Träger vorgesehen ist, der einen nur in einer zweiten Abtastrichtung wirksamen Abtastkopf trägt.

Aus der FR-A 2 339 210 ist eine Art Abtastvorrichtung mit einem rotierenden Abtasttisch bekannt.

Bei dieser Vorrichtung wird die Abtastvorlage (Fahrdiagramm) auf einem Drehteller aufgebracht, die Abtastung erfolgt durch ein radial angeordnetes feststehendes Abtastelement.

Die der Erfindung zugrundeliegende Aufgabe besteht darin, eine äusserst präzise arbeitende, hochauflösende Abtastvorrichtung vorzusehen, bei der die Abtastvorlage unbewegt bleibt. Dadurch wird es möglich, z.B. Fingerabdrücke oder Originaldokumente ohne zusätzliche Massnahmen direkt abzutasten. Diese Aufgabe wird erfindungsgemäss durch die im kennzeichnenden Teil des Anspruchs 1 genannten Massnahmen gelöst.

Drehsymmetrische Aufzeichungen können durch Berücksichtigung von Polarkoordinaten (im Gegensatz zu kartesischen Koordinaten) wesentlich kondensierter gespeichert werden.

Die Erfindung wird nunmehr anhand von Ausführungsbeispielen in Verbindung mit den beigefügten Zeichnungen im einzelnen näher erläutert. Es zeigen:

Fig. 1 und 2 Ein Ausführungsbeispiel der Erfindung mit einem Abtastelement, das radial zu einer Drehscheibe verfahrbar angeordnet ist,

Fig. 3 ein anderes Ausführungsbeispiel der Erfindung, bei dem das Abtastelement fest auf einer rotierenden Drehscheibe angeordnet ist und sich mindestens über die Hälfte seines Durchmessers erstreckt.

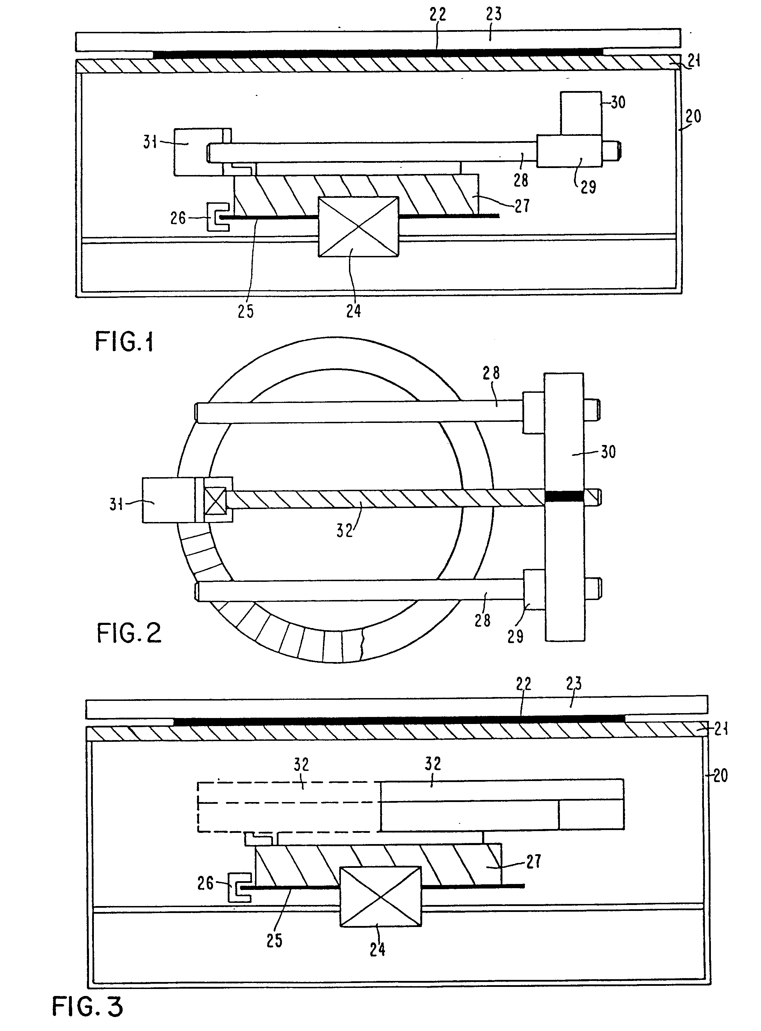

Das in den Figuren 1 und 2 gezeigte Ausführungsbeispiel der Erfindung weist ein Gehäuse 20 auf, das an seiner Oberseite eine durchsichtige Auflagenplatte 21 trägt, auf der eine abzutastende Vorlage 22 liegt. Das ganze ist mit einem Deckel 23 abgeschlossen.

Im dem Gehäuse 20 ist auf einem Zwischenboden ein Antriebsmotor 24 angebracht, der beispielsweise ein Gleichstrommotor sein kann. Dieser Gleichstrommotor trägt eine Positionscodeplatte, die Positionsmarkierungen trägt, die wiederum durch einen Positionsfühler 26 abgefühlt werden können. Auf dieser Positionscodeplatte 25 sitzt als erster Träger eine Drehscheibe 27. Diese Drehscheibe ist mit konstanter Geschwindigkeit drehbar. Auf dieser Drehscheibe 27 sind Gleitschienen 28 angebracht, die als zweiter Träger dienen. Auf diesen, mit hoher Präzision ausgeführten Gleitschienen 28 gleitet in Gleitbuchsen 29 ein optisches Abtastelement 30, das beispielsweise eine Fotodiodenanordnung, eine Optik, eine Beleuchtungseinrichtung und ähnliche Mittel enthält. Das optische Abtastelement 30 ist dann mit Hilfe einer Antriebsvorrichtung, bestehend aus einem Antriebsmotor 31 und einer Antriebsspindel 32 quer zur Drehscheibe 27 verfahrbar. Die Abtastbewegung spielt sich dabei so ab, dass während einer halben Umdrehung der Drehscheibe 27 das optische Abtastelement 30 in der Darstellung der Fig. 3 die Drehscheibe von links nach rechts überfährt. Im Prinzip würde es genügen, wenn die Bewegung des Abtastelements nur bis zur Mitte der Drehscheibe 27 erfolgen würde.

Man sieht wiederum, dass die beiden Antriebsvorrichtungen voneinander unabhängig und gegeneinander entkoppelt sind.

Die in Fig. 3 gezeigte Ausführungsform entspricht im wesentlichen der Ausführungsform gemäss Fig.1 und 2, jedoch mit dem Unterschied, dass das optische Abtastelement nunmehr fest auf der Drehscheibe 27 angebracht ist, und sich mindestens über die Hälfte des Durchmessers der Drehscheibe 27, vorzugsweise aber über den gesamten Durchmesser erstreckt. Als optisches Abtastelement wird in diesem Fall eine Fotodiodenzeile von beispielsweise 4096 Fotodioden verwendet. Bei einer einmaligen Umdrehung der Drehscheibe 28 um 180° erfolgt eine vollständige Abtastung der Vorlage 22. Fotodiodenzeilen sind an sich seit langem bekannt und ihre Wirkungsweise bedarf hier keiner weiteren Erläuterung. Es muss aber klargestellt werden, dass bei der Ausführungsform gemäss Fig. 3 nur noch eine Drehbewegung der Drehscheibe stattfindet, während die eigentliche Abtastung nurmehr über das optische Abtastelement 30 erfolgt, das das von der Vorlage reflektierte Licht aufnimmt und einer Verarbeitungseinheit zuleitet. Diese Vorrichtung besitzt nunmehr nur noch einen einzigen Freiheitsgrad, nämlich den der Drehung der Drehscheibe 27.

Mit dieser neuen Anordnung lässt sich eine ausserordentlich hohe Auflösung bei aussergewöhnlich guter Präzision erzielen.

## Patentanspruch

1. Optoelektronische Abtastvorrichtung, bei der die Abtastung durch eine relative Rotations-Drehung des Aufzeichnungsträgers (22) gegenüber einem radial verlaufenden Abtastelement (30, 32) erfolgt, dadurch gekennzeichnet, dass das Abtastelement (30) mit hoher Präzision quer zu einer rotierenden Drehscheibe (25) mindestens bis zu deren Mitte beweglich angeordnet ist.

oder

dass das Abtastelement (32) fest auf der rotierenden Drehscheibe (25) angebracht ist und sich mindestens über die Hälfte ihres Durchmessers erstreckt und dass jeweils die Aufzeichnungsträgerebene parallel zur Drehscheibe verläuft.

## Claim

1. Opto-electronic scanning device, where scanning is effected by a relative rotational movement of the record carrier (22) with respect to a radially extending scanning element (30, 32) characterized in

that the scanning element (30) is arranged with high precision transversally to a rotating disc (25) and movable at least up to its center, or

that the scanning element (32) is fixed on the rotating disc (25) and extends over at least half of its diameter.

and that the respective record carrier plane extends in parallel to the rotating disc.

## Revendications

1. Appareil d'exploration opto-électronique, dans lequel l'exploration s'effectue au moyen d'une rotation relative du support d'enregistrement (22) par rapport à un élément radial d'exploration (30, 32), caractérisé par le fait que l'élément d'exploration (30) est disposé de manière à être déplaçable, d'une manière très précise, transversalement par rapport à un disque rotatif (25), au moins jusqu'au centre de ce dernier, ou

que l'élément d'exploration (32) est monté fixe sur le disque rotatif (25) et s'étend au moins sur la moitié du diamètre de ce disque,

et que le plan du support d'enregistrement est parallèle au disque rotatif.

FIG.1

FIG.2

FIG.3